# EUROPÄISCHE PATENTSCHRIFT

(11) **EP 0 872 992 B1**
(45) Veröffentlichungstag und Bekanntmachung des Hinweises auf die Patenterteilung: **17.08.2005**
(21) Anmeldenummer: 98105203.8
(22) Anmeldetag: 23.03.1998
(51) Int. Cl.: H04M 1/57, H04M 3/42

(54) **Telekommunikationsanlage mit Weitergabe von Daten während des Rufes**
Telecommunication exchange with transferring data during the call
Central de télécommunication à transfert de données pendant l'appel

(30) Priorität: 18.04.1997 DE 19716246
(43) Veröffentlichungstag der Anmeldung: 21.10.1998
(73) Patentinhaber: Deutsche Telekom AG, 53113 Bonn (DE)
(72) Erfinder: Holderried, Harry, Ing. (grad.), 64367 Mühltal (DE); Dihlmann, Klaus, Dipl.-Ing., 64839 Altheim (DE)

(56) Entgegenhaltungen:
- US-A- 5 351 289
- US-A- 5 396 548
- US-A- 5 479 493

## Beschreibung

Die Erfindung bezieht sich auf eine Telekommunikationsanlage mit den Merkmalen des Oberbegriffes vom Anspruch 1.

Es ist allgemein bekannt, daß es auch bei analogen Endgeräten möglich ist, die Rufnummer des rufenden A-Teilnehmers beim gerufenen B-Teilnehmer mittels spezieller Endgeräte oder Zusatzgeräte vor Verbindungsannahme anzeigen zu lassen, sofern die netz- und vermittlungstechnischen Voraussetzungen gegeben sind. Die Rufnummer des rufenden Teilnehmers wird bei diesem Verfahren von dem rufenden Netzknoten (= Vermittlungsstelle, an die der gerufene Teilnehmer angeschlossen ist) in einem FSK-codierten digitalen Datentelegramm (**F**requency **S**hift **K**eying) zwischen dem 1. und dem 2. Rufsignalimpuls zum Anschluß des gerufenen Teilnehmers übertragen. Bekannt ist dieses Leistungsmerkmal unter der Bezeichnung "CLIP" (Calling Line Identification Presentation). Die netz- und vermittlungstechnischen Voraussetzungen zur Nutzung dieses Leistungsmerkmals wurden und werden von vielen Netzbetreibern, so auch von der Deutschen Telekom AG, geschaffen. Die notwendigen speziellen Endgeräte, die die übertragenen Daten auswerten und die Rufnummer des rufenden Teilnehmers anzeigen, sind ebenfalls verfügbar. Zusätzlich zum Merkmal CLIP lassen sich auch andere Informationen zwischen den Rufsignalimpulsen übertragen. Zum Beispiel: "Abrufbare Nachricht liegt vor" (MWI), Tarifinformationen (AOC), Datum und Uhrzeit sowie der Anruftyp (Call Type). Ebenso können auch Gerätekennungen, wie das zum Beispiel bei Faxgeräten der Fall ist, übertragen werden. Der Angerufene sieht, durch welches Gerät er angerufen wird.

Durch die zunehmende Zahl solcher Leistungsmerkmale werden die verschiedenen Telekommunikationsdienste immer attraktiver für die Benutzer.

Auf der anderen Seite werden in privaten Haushalten immer mehr Telekommunikations-Anlagen (TK-Anlagen) eingesetzt. TK-Anlagen sind private Vermittlungssysteme, die es ermöglichen, ein kleines Telekommunikationsnetz aufzubauen und zu verwalten. Es ist möglich, eingehende Anrufe selektiv an verschiedene Endgeräte weiterzuleiten. Alle Teilnehmeranschlüsse laufen über einen zentralen Knoten, der ein Koppelfeld bildet. Über diese Koppelnetze werden die öffentlichen Leitungen mit den Teilnehmeranschlüssen verbunden. Über die Systemperipherie - dies ist meistens ein Rechner - erfolgt die Steuerung, Wartung, Konfiguration und Administration.

Zur Zeit gibt es bei TK-Anlagen, wie sie in den Privathaushalten üblicherweise benutzt werden, eine wesentliche Einschränkung, die eine Nutzung der neuen Telefondienstleistungsmerkmale nicht gestattet; die Daten werden nicht unverfälscht zum auswertenden Endgerät weitergegeben. In der Praxis bedeutet dies zur Zeit, daß nur Endgeräte die direkt oder auch über Mehrfachschalter (also in der Ruhephase parallel) am Netzanschluß betrieben werden, die Datenauswertung vornehmen können.

Aus der US-Patentschrift US5396548 ist eine Telekommunikationsanlagen bekannt, die Daten aus dem Telekommunikationsnetz ausfiltern und an die Endgeräten weiterleiten. Diese Daten werden zuerst demoduliert, zwischengespeichert, verarbeitet, moduliert und dann an die Endgeräte weitergeleitet. Dieses Verfahren ist sehr aufwendig und teuer, so daß es nur in großen Telekommunikationsanlagen eingesetzt wird. In kleinen Telekommunikationsanlagen, wie sie beispielsweise in privaten Haushalten eingesetzt werden, wird dieses Verfahren deshalb nicht eingesetzt.

Der Erfindung liegt die Aufgabe zugrunde, bekannte Telekommunikationsanlagen derart weiterzuentwickeln, daß mit den Rufsignalen des rufenden Teilnehmers übertragene codierte Daten zum gerufenen Endgerät auf einfache und kostengünstige Weise unverfälscht übermittelt werden.

Diese Aufgabe wird durch die kennzeichnenden Merkmale des Anspruchs 1 gelöst.
Der Vorteil der erfindungsgemäßen TK-Anlage liegt darin, daß die von Telekommunikationsnetzbetreibern immer mehr angebotenen zusätzlichen Leistungsmerkmale, die auch im privaten Bereich von Vorteil sind, ohne Einschränkung genutzt werden können. Ein weiterer Vorteil liegt darin, daß man nicht auf eine spezielle Art von Datensignal festgelegt ist, und somit der Weg auch für zukünftige neue Leistungsmerkmale des digitalen Netzes offen ist.

In den abhängigen Ansprüchen sollen bevorzugte Weiterbildungen geschützt werden.

Vorteilhaft bei den Ausgestaltungen nach dem Anspruch 2 ist, daß auch bei Anlagen, die das Rufsignal intern erzeugen, eine Weiterleitung der Datensignale gewährleistet ist, da das Datensignal aus dem eingehenden Rufsignal ausgekoppelt wird. Die Ausführung nach Anspruch 2 ist deswegen besonders vorteilhaft, weil durch die selektive Auskopplung Störungen der Datensignale nicht an die Endgeräte weitergegeben werden. Der besondere Vorteil des Anspruches 3 liegt darin, daß der Nachteil eines kleinen Signalpegels der Datensignale vermieden wird und damit mehr als vier Endgeräte gleichzeitig angesprochen werden können, was gerade bei größeren TK-Anlagen erforderlich ist.

Die Erfindung wird nachfolgend am Beispiel der Weiterleitung des CLIP-Signals erläutert. Die Weiterleitung anderer Datensignale kann auf der gleichen Art und Weise erfolgen. Zum leichteren Verständnis ist in den Zeichnungen nur der Teil der TK-Anlagen dargestellt, der zum Verständnis der Erfindung notwendig ist.

Es zeigt :
- Fig. 1:: als Blockschaltbild ein erstes Ausführungsbeispiel einer CLIP-Signalweiterleitung für maximal vier Endgeräte (Direktdurchschaltung),
- Fig. 2:: als Blockschaltbild ein zweites Ausführungsbeispiel einer CLIP-Signalweiterleitung für maximal vier Endgeräte (mit Auskopplung),
- Fig. 3:: als Blockschaltbild ein drittes Ausführungsbeispiel einer CLIP-Signalweiterleitung für mehr als vier Endgeräte und
- Fig. 4:: als Blockschaltbild ein viertes Ausführungsbeispiel einer CLIP-Signalweiterleitung für mehr als vier Endgeräte (mit Zwischenspeicher).
- Fig. 5:: ein Beispiel für die Signalcodierung einer digitalen Information anhand der FSK-codierung.
- Fig. 6:: den Signalverlauf bei der Modulation, Speicherung und Demodulation eines codierten Signals.

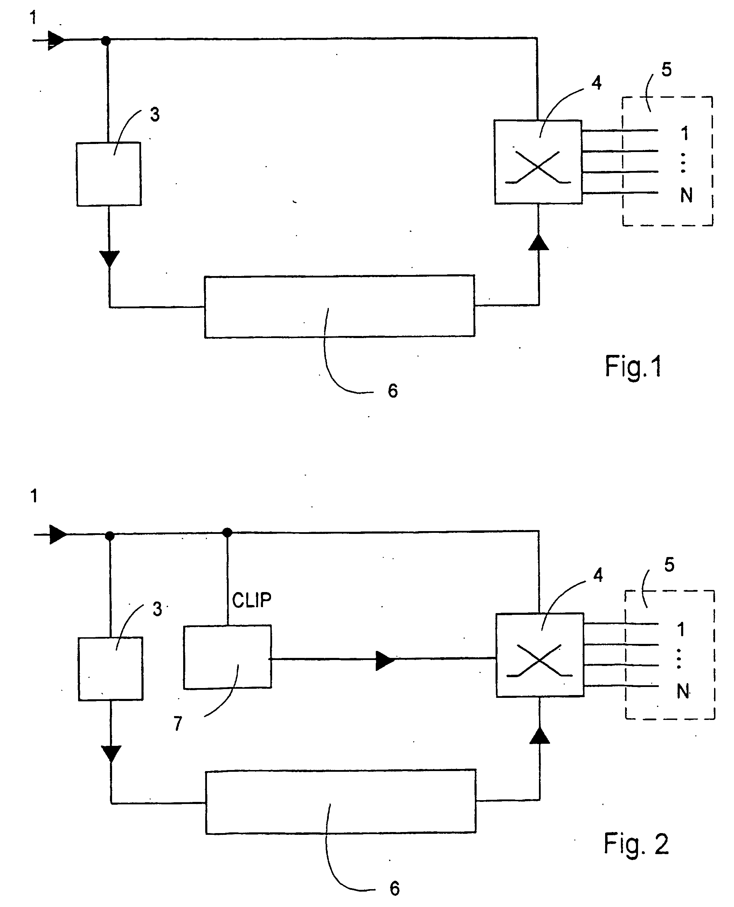

In der Schaltung nach Fig. 1 werden die Rufsignale 1 von einer Rufsignalerkennung 3 detektiert und Koppelfeld 4 geleitet. An dem Port 5 des Koppelfeldes sind Endgeräte 1....N angeschlossen. Eine zentrale Steuerung 6, die neben allen anderen Funktionen und Baugruppen der TK-Anlage auch das Koppelfeld 4 koordiniert und verwaltet, erhält von der Rufsignalerkennung 3 die Information über anliegende Rufsignale 1 und verbindet mittels des Koppelfeldes 4 die Endgeräte mit dem Telekommunikationsnetz. Bei einem eingehenden Ruf mit CLIP-Signalen geschieht nun Folgendes :

Durch die Rufsignalerkennung 3 wird das Ende des 1. Rufsignalimpulses erkannt und an die zentrale Steuerung 6 gemeldet. Das CLIP-Signal wird transparent über das Koppelfeld 4 an die Endgeräte 1..N weitergeleitet und kann ausgewertet werden. Dieses Ausführungsbeispiel ist aber nur möglich bei TK-Anlagen mit maximal 4 Endgeräten, ansonsten reicht die vom Netz zur Verfügung gestellte Leistung nicht aus.

In Figur 2 wird die Schaltung nach Figur 1 um eine CLIP-Signalauskopplung 7 ergänzt. Bei den meisten auf dem Markt erhältlichen TK-Anlagen wird das originale Rufsignal nicht direkt an die Endgeräte weitergeleitet. Da die TK-Anlagen sowieso eine externe Versorgung benötigen, stellt die interne Erzeugung der Rufsignale weder eine technisches noch ein wirtschaftliches Problem dar. Eine Verbindung mit dem Telekommunikationsnetz wird erst dann hergestellt, wenn ein Endteilnehmer das Gespräch annimmt. Dies ist auch der Grund, weshalb das CLIP-Signal ausgekoppelt und direkt dem Koppelfeld 4 zugeführt wird. Die CLIP-Signalauskopplung 7 trennt das Clip-Signal vom restlichen Rufsignal ab. Die Auskopplung kann beispielsweise durch einen passenden Frequenzfilter erfolgen, was gleichzeitig den Vorteil hat, eventuelle Störungen aus dem CLIP-Signal wegzufiltern.
Diese Schaltung ist aber nur einsetzbar, wenn die Leistung des CLIP-Signals so groß ist, daß die Endgeräte dies auswerten können. In der Regel ergeben sich Schwierigkeiten bei mehr als 4 Endgeräten. Vorteilhaft ist aber die einfache und damit wirtschaftliche Ausgestaltung.

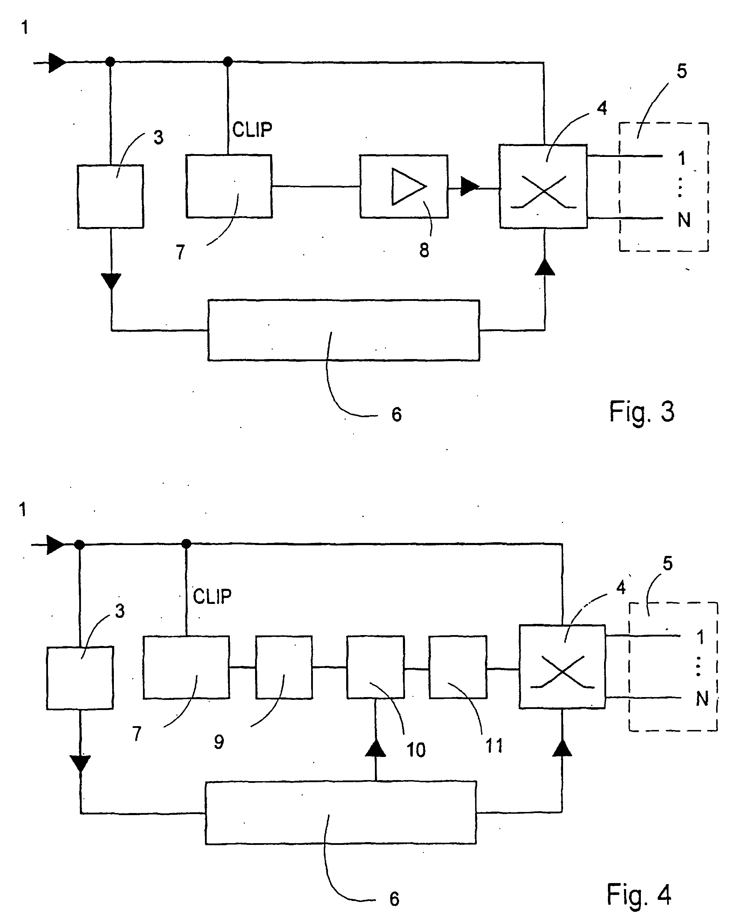

Figur 3 stellt eine um ein Verstärkungselement 8 erweitertes Schaltbild nach Figur 2 dar. Durch das Verstärkungselement 8 wird der Nachteil bei beiden oben beschriebenen Schaltungen, die Begrenzung der Zahl der rufbaren Endgeräte, bedingt durch den kleinen CLIP-Pegel, behoben. Will man daher mehr als vier Endgeräte gleichzeitig ansprechen, so muß das CLIP-Signal verstärkt werden. Durch die Verstärkung ist man nun in der Lage, beliebig viele Endgeräte gleichzeitig anzusprechen. Das Verstärkungselement wird zwischen CLIP-Signalauskopplung 7 und dem Koppelfeld 4 eingefügt. Die Verstärkungsleistung muß der Zahl der Endgeräte angepaßt werden. Je mehr Endgeräte angesprochen werden sollen, desto höher muß die Ausgangsleistung des Verstärkers sein.

Figur 4 stellt eine Variante der Schaltung mit Zwischenspeicherung dar. Da das CLIP-Signal aus Sicherheitsgründen gewisse zeitliche Abstände zu den Rufsignalimpulsen haben muß, ist es von Vorteil, das CLIP-Signal zwischenzuspeichern, um es dann zeitrichtig zu den Rufsignalimpulsen den Endgeräten zuzuführen. Damit vermeidet man insbesondere in größeren TK-Anlagen, daß es zu Störungen in der zeitlich richtigen Signalabfolge "1. Rufsignalimpuls - CLIP-Signal - 2. Rufsignalimpuls" kommen kann. Eine Lösungsmöglichkeit besteht in der Nutzung eines Speichers für das CLIP-Signal. Da FSK-codierte Signale zwei verschiedenen Frequenzen enthalten, wäre eine direkte analoge Speicherung zu aufwendig. Deshalb ist es sinnvoll, das FSK-codierte Signal zu decodieren, und die Information digital zu speichern.
Eine mögliche Vorgehensweise ist Folgende :
Die CLIP-Daten werden durch die CLIP-Signalauskopplung 7 ausgekoppelt und einem Demodulator 9 zugeführt. Dieser wandelt das FSK-codierte CLIP-Signal in ein reines digitales Signal um. Dieses kann nun von einem Zwischenspeicher 10 (der ein einfacher kommerziell erhältlicher digitaler Speicherbaustein sein kann) gespeichert, zum richtigen Zeitpunkt durch den Modulator 11 wieder FSK-codiert und dem Koppelfeld 4 zugeführt werden. Die Verstärkung kann durch den Modulator 11 oder durch einen hier nicht eingezeichneten separaten Verstärker erfolgen.

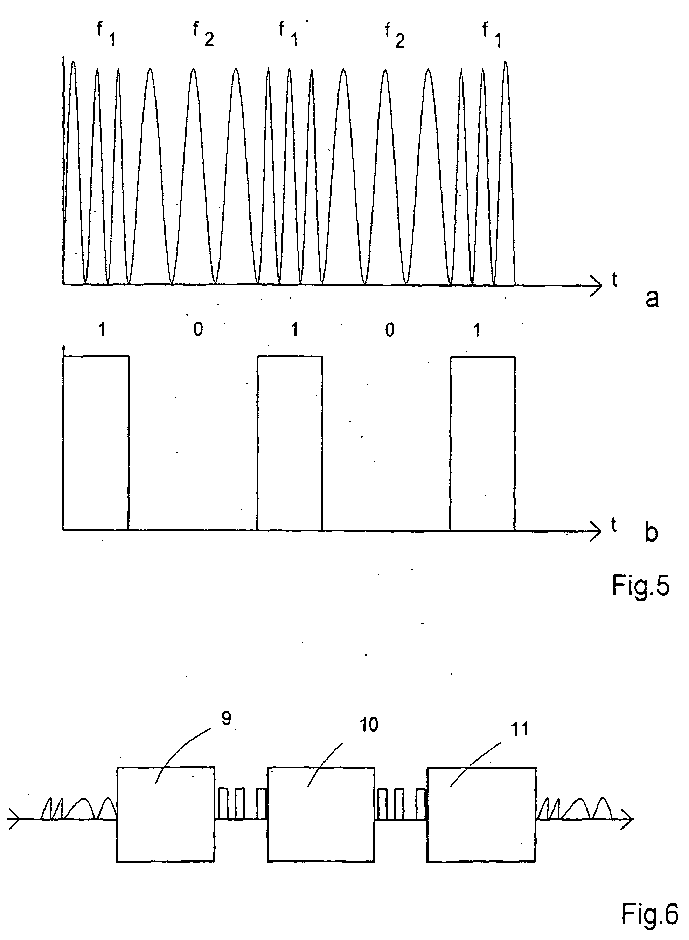

In Fig. 5a ist zur Veranschaulichung ein FSK-codiertes Signal und in Fig. 5b die zugehörige binäre Information dargestellt. Binär 1 aus Fig. 5b entspricht in Fig. 5a der Frequenz f₁, und Binär 0 aus Fig. 5b der Frequenz f₂ aus Fig. 5a.

In Fig. 6 ist der Signalverlauf beim Demodulieren, Speichern und Modulieren genauer dargestellt.

Die Schaltungen nach den Figuren 1-4 können auch durch entsprechende integrierte Schaltkreise verwirklicht werden.

Analog den eben genannten Ausführungsbeispielen ist es genauso möglich, andere Arten von Datentelegrammen während des Rufes an die Endgeräte weiterzuleiten. Dadurch ergibt sich die Möglichkeit, analoge TK-Anlagen so auszubauen, daß auch die für die Zukunft geplanten neuen Leistungsmerkmale des digitalen Telekommunikationsnetzes genutzt werden können.

## Patentansprüche

1. Telekommunikationsanlage für analoge Endteilnehmeranschlüsse eines Telekommunikationsnetzes, das zwischen Rufsignalen codierte Datensignale an die Endteilnehmeranschlüsse überträgt, mit
• einem Koppelfeld (4), über das die daran angeschlossenen Endgeräte (1..N) mit dem Telekommunikationsnetz verbindbar sind,
• einer zentralen Steuerung (6), die das Koppelfeld (4) in Abhängigkeit von Steuersignalen koordiniert und schaltet, und
• einer Rufsignalerkennungsschaltung (3), die an die zentralen Steuerung (6) Steuersignale abgibt,
**dadurch gekennzeichnet,**
**daß** die Rufsignalerkennungsschaltung (3) nach Ablauf des 1. Rufsignals ein Steuersignal an die zentrale Steuerung (6) überträgt und
**daß** die zentrale Steuerung (6) nach Erhalt dieses Steuersignals das Koppelfeld (4) so schaltet, daß die codierten Datensignale direkt vom Telekommunikationsnetz zu den Endgeräten (1..N) übertragen werden.

2. Telekommunikationsanlage nach Anspruch 1, **dadurch gekennzeichnet,**
**daß** die codierten Datensignale mittels eines Frequenzfilters (7) einem zusätzlichen Eingang des Koppelfeldes (4) zugeführt werden und
**daß** dieser zusätzlicher Eingang mit den Ausgängen des Koppelfeldes (4) aufgrund eines Steuersignals der zentralen Steuerung (6) verbunden wird.

3. Telekommunikationsanlage nach Anspruch 2, **dadurch gekennzeichnet,**
**daß** zwischen Frequenzfilter (7) und zusätzlichem Eingang ein Verstärkungselement (8) angeordnet ist.

## Claims

1. Telecommunication system for analog subscriber lines of a telecommunication network, which network transmits coded data signals to the subscriber lines between ring signals, having
• a switching unit (4) by means of which the terminal devices (1..N) connected thereto can be connected to the telecommunication network,
• a central control unit (6), which coordinates and switches the switching unit (4) as a function of control signals, and
• a ring signal detection circuit (3), which issues control signals to the central control unit (6),
**characterized in that**
the ring signal detection circuit (3) transmits a control signal to the central control unit (6) after the end of the first ring signal, and
**in that**, after receiving this control signal, the central control unit (6) switches the switching unit (4) such that the coded data signals are transmitted directly from the telecommunication network to the terminal devices (1..N).

2. Telecommunication system according to claim 1, **characterized in that**
the coded data signals are fed to an additional input of the switching unit (4) by means of a frequency filter (7), and
**in that** this additional input is connected to the outputs of the switching unit (4) on the basis of a control signal from the central control unit (6).

3. Telecommunication system according to claim 2, **characterized in that**
an amplifying element (8) is arranged between the frequency filter (7) and the additional input.

## Revendications

1. Installation de télécommunications pour terminaux analogiques d'un réseau de télécommunications transmettant, entre des signaux acoustiques, des signaux de données codés et comportant
• un étage de commutation (4) par lequel les terminaux y raccordés (1..N) peuvent être connectés au réseau de télécommunications,
• une unité centrale de commande (6) destinée à coordonner et à commuter l'étage de commutation (4) en fonction de signaux de commande et
• un circuit d'identification de signaux acoustiques (3) qui transmet des signaux de commande à l'unité centrale de commande (6),
**caractérisée en ce que**
le circuit d'identification de signaux acoustiques (3) transmet, après le premier signal acoustique, un signal de commande à l'unité centrale de commande (6) et
l'unité centrale de commande (6), après avoir reçu ce signal de commande, règle l'étage de commutation (4) de façon à transmettre les signaux de données codés directement depuis le réseau de télécommunications vers les terminaux (1..N).

2. Installation de télécommunications selon la revendication 1, **caractérisée en ce que**
les signaux de données codés sont appliqués, au moyen d'un filtre de fréquences (7), à une entrée supplémentaire de l'étage de commutation (4) et
cette entrée supplémentaire est connectée aux entrées de l'étage de commutation (4) en fonction d'un signal de commande émis par l'unité centrale de commande (6).

3. Installation de télécommunications selon la revendication 2, **caractérisée en ce que**
un élément d'amplification est disposé entre le filtre de fréquences (7) et l'entrée supplémentaire.
